# EUROPÄISCHE PATENTANMELDUNG

(11) **EP 4 843 377 A1**
(43) Veröffentlichungstag der Anmeldung: **25.11.2026**
(21) Anmeldenummer: 26166755.4
(22) Anmeldetag: 23.03.2026
(51) Int. Cl.: A01D 43/08, A01D 43/14, B08B 3/04, B08B 9/032, A01D 34/00

(54) **VERFAHREN ZUM REINIGEN EINER SENSORANORDNUNG EINER LANDWIRTSCHAFTLICHEN ERNTEMASCHINE**

(30) Priorität: 22.05.2025 DE 102025119993
(71) Anmelder: CLAAS Selbstfahrende Erntemaschinen GmbH, 33428 Harsewinkel (DE)
(72) Erfinder: Neitemeier, Dennis, 59510 Lippetal (DE); Belau, Sven Carsten, 33332 Gütersloh (DE); Bönig Dr., Ingo, 33330 Gütersloh (DE); Cord-Kruse, Christian, 48231 Warendorf (DE); Dirksen, Matthis, 48231 Warendorf (DE); Titkemeier, Daniel, 49080 Osnabrück (DE)
(74) Vertreter: CLAAS Gruppe

(57) **Zusammenfassung**

Die vorliegende Erfindung betrifft ein Verfahren zum Reinigen einer Sensoranordnung (28) einer landwirtschaftlichen Erntemaschine (1), insbesondere eines Feldhäckslers (30), wobei ein Gutstrom (20), umfassend eine Erntegutmenge, durch zumindest ein Arbeitsaggregat (3, 4, 5, 6) der landwirtschaftlichen Erntemaschine (1) gefördert und zumindest eine Eigenschaft des Gutstroms (20) durch die Sensoranordnung (28) erfasst wird, wobei der Erntegutmenge zum Reinigen der Sensoranordnung (28) ein Reinigungsfluid (12) mittels einer Reinigungsvorrichtung (34) zugegeben wird, sobald die Erntegutmenge im Gutstrom (20) einen definierten Wert erreicht.

## Beschreibung

Die vorliegende Erfindung betrifft ein Verfahren zum Reinigen einer Sensoranordnung einer landwirtschaftlichen Erntemaschine. Weiterhin ist eine landwirtschaftliche Erntemaschine Gegenstand der vorliegenden Erfindung.

Die Sensoranordnungen und optischen Sensoren von landwirtschaftlichen Erntemaschinen stehen im täglichen Einsatz oft vor der Herausforderung, ihre Funktionalität zu bewahren. Besonders deutlich wird dies beispielsweise bei den Sensoren im Auswurfkrümmer, wo die Verunreinigung durch das Erntegut häufig besonders intensiv ist. Ein zentrales Problem ist, dass üblicherweise die Sichtfenster der Sensoren bei schmutzigem oder staubigem Futter rasch verkleben können. Besonders zuckerhaltiges Gras kann dieses Phänomen begünstigen, da der Zucker dafür sorgen kann, dass der Schmutz an der Sichtscheibe haftet. Diese Ablagerungen schränken die Sicht der Sensoren möglicherweise ein und beeinträchtigen die Genauigkeit der gewonnenen Daten.

Die Reinigung der Sensoranordnung kann zeitaufwendig sein. Üblicherweise bleibt dem Fahrer oft nur der mühsame Abstieg von der Maschine, um das Sichtfenster bzw. die Sensoranordnung manuell zu säubern. Dies kann nicht nur zu unerwünschten Betriebsunterbrechungen führen, sondern mindert auch den Komfort des Fahrers erheblich. Besonders auf stark verschmutzten Feldern oder bei sehr trockenen Bedingungen in Kombination mit zuckerhaltigem Futter ist eine häufige Reinigung typischerweise unumgänglich. Aus der Praxis ist jedoch bekannt, dass der hohe Zeitdruck während der Ernte oft verhindert, dass dieser Reinigung nachgekommen werden kann. Um die Effizienz und Präzision der Ernteprozesse zu sichern, ist es daher von größter Bedeutung, die Sensoren regelmäßig zu warten und zu reinigen, damit sie ihren wichtigen Aufgaben jederzeit optimal nachkommen können.

Eine Aufgabe der vorliegenden Erfindung ist es daher, die bisherigen Verfahren und Vorrichtungen derart weiterzuentwickeln, dass eine Reinigung der Sensoranordnung während des Erntebetriebs ermöglicht wird.

Diese Aufgabe wird durch die hier offenbarten Ausführungsformen gelöst, die insbesondere durch den Gegenstand der unabhängigen Ansprüche definiert sind. Die abhängigen Ansprüche betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Ein Aspekt bezieht sich auf ein Verfahren zum Reinigen einer Sensoranordnung einer landwirtschaftlichen Erntemaschine, insbesondere eines Feldhäckslers. Dabei kann ein Gutstrom, umfassend eine Erntegutmenge, durch zumindest ein Arbeitsaggregat der landwirtschaftlichen Erntemaschine gefördert und zumindest eine Eigenschaft des Gutstroms durch die Sensoranordnung erfasst werden. Ferner kann der Erntegutmenge zum Reinigen der Sensoranordnung ein Reinigungsfluid zugegeben werden, sobald die Erntegutmenge im Gutstrom einen definierten Wert erreicht.

Das Reinigen einer Sensoranordnung kann sich auf den Prozess der Beseitigung von Verunreinigungen, Ablagerungen und Schmutz von den verschiedenen Komponenten eines Sensorsystems beziehen, das in landwirtschaftlichen Erntemaschinen eingesetzt wird. Diese Sensoranordnungen, die häufig optische Sensoren umfassen, können entscheidend sein für die genaue Erfassung von Daten während des Ernteprozesses.

Der Gutstrom könnte sich auf den Fluss und die Menge des Ernteguts, d.h. die Erntegutmenge, beziehen, das während eines Erntevorgangs möglicherweise von den Erntemaschinen erfasst, transportiert und verarbeitet wird. Der Gutstrom könnte typischerweise sämtliche physischen und inhaltlichen Aspekte des geernteten Materials umfassen, einschließlich der Qualität, Quantität und Eigenschaften des Ernteguts. Die Eigenschaft des Gutstroms könnte sich auf spezifische Merkmale beziehen, die das Erntegut charakterisieren und möglicherweise seine Verarbeitung im landwirtschaftlichen Kontext beeinflussen. Zu den wesentlichen Eigenschaften des Gutstroms könnten typischerweise die Menge des geernteten Materials, die Qualität des Ernteguts, die Schadensfreiheit sowie die Zusammensetzung zählen, die möglicherweise den Gehalt an verschiedenen Pflanzenteilen beschreibt. Die Feuchtigkeit, die den Wassergehalt widerspiegeln könnte, und die Verunreinigungen, die das Vorhandensein unerwünschter Stoffe oder Fremdkörper betreffen könnten, wären ebenfalls Eigenschaften.

Das Reinigungsfluid könnte als spezielle Flüssigkeit definiert werden, die für die effektive Entfernung von Schmutz, Ablagerungen und Verunreinigungen auf Oberflächen und in Geräten genutzt wird. Typischerweise enthält es Lösungsmittel und Tenside, die das Reinigen erleichtern, sowie antibakterielle Komponenten zur Gewährleistung von Hygiene. Der pH-Wert des Reinigungsfluids kann üblicherweise optimal eingestellt sein, um die Reinigungseffizienz zu maximieren und Oberflächenschäden zu vermeiden. Es können umweltfreundliche Inhaltsstoffe verwendet werden, um die ökologischen Auswirkungen zu minimieren. In verschiedenen Formen wie Spray oder Gel kann das Reinigungsfluid entscheidend für die Reinigung der Sensoranordnung eingesetzt werden.

Der definierte Wert könnte im Kontext der Erntegutmenge als ein spezifischer, vorab festgelegter Schwellenwert verstanden werden, der signalisiert, wann eine bestimmte Aktion erforderlich ist. In diesem Fall bezieht sich der definierte Wert beispielsweise auf die Menge des Ernteguts, die im Gutstrom vorhanden ist und die als Grundlage dienen kann, um zu entscheiden, ob und wann ein Reinigungsfluid zur Reinigung der Sensoranordnung hinzugefügt werden soll. Mit anderen Worten kann die Menge von Reinigungsfluid abhängig von der Höhe der Erntegutmenge im Gutstrom angepasst werden. Sobald die Erntegutmenge diesen definierten Wert erreicht, könnte dies darauf hinweisen, dass eine relevante Verschmutzung der Sensoren wahrscheinlich ist, wodurch die Effizienz und Genauigkeit der Sensoranordnung gefährdet werden könnte. Die Einhaltung dieses definierten Wertes würde gewährleisten, dass rechtzeitig Maßnahmen zur Reinigung ergriffen werden, um eine optimale Funktion der Sensoren während des Ernteprozesses sicherzustellen.

Wenn das Reinigungsfluid der Erntegutmenge hinzugefügt wird, könnte sich eine harmonische Vermischung entwickeln. Der Gutstrom kann eine Mischung aus Reinigungsfluid und Erntegutmenge umfassen. Wenn der Gutstrom mit der Sensoranordnung in Kontakt kommt, kann die Sensoranordnung mittels des Reinigungsfluids gereinigt werden. Mit anderen Worten kann kurzfristig, für wenige Sekunden, die eine zuvor durch den Bediener der landwirtschaftlichen Arbeitsmaschine eingestellte Menge an Reinigungsfluid in die Erntegutmenge dosiert werden, sobald die Sensoranordnung eine Beeinträchtigung der Sicht feststellt. Dieses angefeuchtete Erntegut kann wie ein nasser Schwamm wirken, der die Sichtscheibe der Sensoranordnung reinigt. Aufgrund der hohen Geschwindigkeit und des damit verbundenen hohen Anpressdrucks des Gutstroms können hartnäckige Verschmutzungen effektiv abgerieben werden. Zusätzlich kann das zugegebene Reinigungsfluid unterstützen, den Zucker von der Sichtscheibe zu lösen. Eine automatisierte Reinigung mittels des zugegebenen Reinigungsfluids ist somit einfach möglich. Mit anderen Worten würde die automatische Reinigung der Sichtscheiben die Sensorleistung und Zuverlässigkeit bei sämtlichen Erntebedingungen verbessern, da die optischen Sensoren stets präzise und zuverlässig arbeiten könnten, unabhängig von den vorherrschenden Bedingungen. Dies könnte zu einer konstant hohen Genauigkeit der Sensoren führen, selbst in stark verschmutzten oder staubigen Feldern, und somit die Verlässlichkeit der Ernteergebnisse insgesamt erhöhen. Ferner könnte der Fahrerkomfort erheblich gesteigert werden, da die Erfindung dem Fahrer die zeitaufwändige Aufgabe der manuellen Reinigung abnehmen würde. Dabei kann eine kontinuierliche Betriebsfähigkeit der Maschine sichergestellt werden, indem die Notwendigkeit für Stopps zur manuellen Reinigung der Sichtfenster entfallen könnte.

In einem weiteren Aspekt kann die Erntegutmenge kontinuierlich bestimmt werden, indem eine Auslenkung eines Arbeitsaggregats ermittelt wird, und wobei das Erreichen des definierten Werts mittels der Auslenkung bestimmt wird.

Die Auslenkung eines Arbeitsaggregats, wie beispielsweise der Vorpresswalzen eines Feldhäckslers, könnte möglicherweise als der Abstand oder die relative Position der einzelnen Komponenten zueinander verstanden werden. In diesem Kontext würde die Auslenkung typischerweise beschreiben, wie weit die Vorpresswalzen von einer definierten, nominalen Position oder zueinander entfernt sein könnten. Bei der Erntegutbearbeitung, wo diese Walzen dazu dienen, das Erntegut einzuziehen und zu fördern, wäre die Auslenkung von Bedeutung, da sie möglicherweise die Effizienz des Ernteprozesses und die Qualität des verarbeiteten Materials beeinflussen könnte. Eine optimale Auslenkung könnte dafür sorgen, dass das Erntegut effektiv transportiert und möglicherweise eine ausreichende Erntegutmenge im Gutstrom gefördert wird. Ein geringer Abstand der Vorpresswalzen zueinander könnte bedeuten, dass eine geringe Menge an Erntegut eingezogen wird. Ferner würde eine bestimmte Auslenkung beispielsweise darauf hindeuten, dass eine bestimmte Menge an Erntegut erfolgreich aufgenommen oder gefördert wird. Eine kontinuierliche Analyse der Auslenkung würde es ermöglichen, in Echtzeit Rückschlüsse auf die Menge des geförderten Ernteguts zu ziehen und entsprechende Anpassungen vorzunehmen, um die Effizienz des Prozesses zu optimieren. Somit kann die Auslenkung bzw. der Abstand des Arbeitsaggregats (in diesem Fall die Vorpresswalze) zum kontinuierlichen Bestimmen der Erntegutmenge herangezogen werden.

In einem weiteren Aspekt kann die Erntegutmenge kontinuierlich mittels von der Sensoranordnung erfassten Bilddaten bestimmt werden. Dabei kann das Erreichen des definierten Werts mittels der Bilddaten bestimmt werden.

Beispielsweise könnten die Bilddaten Informationen über die Dichte und Verteilung des Ernteguts liefern. Durch die Analyse dieser Daten könnte eine genauere Einschätzung der tatsächlich erfassten Menge erfolgen. Bevorzugt kann zur Bildanalyse von durch die Kamera erzeugten Bilddaten des Erntegutes durch den Maschinenlernalgorithmus zumindest ein trainierbares neuronales Netzwerk verwendet werden. Insbesondere kann das zumindest eine neuronale Netzwerk als Basis ein EfficientNet, insbesondere EfficientNetB0, als Architektur und Skalierungsmethode für faltungsneuronale Netze verwenden. Neuronale Faltungsnetzwerke oder auch Convolutional Neural Network (CNN) wie das EfficientNet erzielen in der Bildverarbeitung besonders gute Ergebnisse.

In einem weiteren Aspekt kann die landwirtschaftliche Erntemaschine einen Nachbeschleuniger als Arbeitsaggregat aufweisen. Das Reinigungsfluid kann mittels einer Injektionsvorrichtung in die Erntegutmenge zugegeben werden. Ferner kann die Injektionsvorrichtung dem Nachbeschleuniger in einer Förderrichtung des Gutstroms nachgeordnet sein.

Die Injektionsvorrichtung könnte beispielsweise hinter dem Nachbeschleuniger positioniert sein, so dass das Reinigungsfluid effektiv in die Förderströmung des Ernteguts integriert wird. Auf diese Weise könnte eine optimale Vermischung gewährleistet werden, was möglicherweise die Reinigung der Sensoranordnung verbessert. Die Sensoranordnung könnte hinter der Injektionsvorrichtung und dem Nachbeschleuniger positioniert sein.

In einem weiteren Aspekt kann der Erntegutmenge zumindest ein dessen Qualität begünstigendes Siliermittel und das Reinigungsfluid mittels einer Siliermittelanlage zugegeben werden.

Die Erntegutmenge könnte möglicherweise gleichzeitig mit einem qualitativ begünstigenden Siliermittel und einem Reinigungsfluid über eine Siliermittelanlage behandelt werden. Diese synergetische Zugabe würde es ermöglichen, die Qualität des Ernteguts zu verbessern, während gleichzeitig das Reinigungsfluid zur Reinigung der Sensoranordnung eingeleitet wird. Durch die gleichzeitige Anwendung der beiden Substanzen könnte eine effektive Konservierung des Ernteguts und Reinigung der Sensoranordnung erreicht werden.

In einem weiteren Aspekt kann das Reinigungsfluid der Erntegutmenge in zeitlichen Intervallen zugegeben werden.

Durch die regelmäßige Intervention in festgelegten zeitlichen Intervallen bzw. Abständen könnte zudem sichergestellt werden, dass das Reinigungsfluid optimal in den Gutstrom integriert wird, was eine gleichmäßige Verteilung und bessere Reinigungseffekte zur Folge hätte. Diese kontinuierliche und kontrollierte Zufuhr fördert möglicherweise eine optimale Durchmischung des Reinigungsfluids mit dem Erntegut, was zu einer effektiven Reinigung führen könnte. Darüber hinaus hilft die Intervallzugabe, Klumpenbildung zu vermeiden, da das Reinigungsfluid gleichmäßig verteilt wird, anstatt in großen Mengen auf einmal hinzugefügt zu werden. Dies kann die homogene Verteilung des Reinigungsmittels fördern und verhindern, dass sich Agglomerate im Erntegut bzw. Gutstrom ansammeln, die die Qualität beeinträchtigen könnten.

In einem weiteren Aspekt kann eine Menge des Reinigungsfluids vorbestimmt sein oder bestimmt werden, indem die Erntegutmenge im Gutstrom ermittelt und zumindest eine Eigenschaft des Gutstroms bestimmt wird. Dabei kann die Menge von Reinigungsfluid in Abhängigkeit von der Erntegutmenge und der zumindest einen Eigenschaft des Gutstroms bestimmt werden.

Indem die Menge des Reinigungsfluids in Abhängigkeit von der Erntegutmenge und spezifischen Eigenschaften wie Feuchtigkeit, Dichte oder Verschmutzungsgrad bestimmt wird, kann eine optimale Anpassung an die jeweiligen Bedingungen und Anforderungen der Erntegutverarbeitung erfolgen. Ein weiterer Vorteil liegt in der verbesserten Reinigung der Sensoranordnung, weil durch die zieltiefere Dosierung Verschmutzungen der Sensoren effektiver entfernt und die gewünschten Eigenschaften des Ernteguts besser erhalten werden können. Gleichzeitig wird die Umweltbelastung minimiert, da nur die tatsächlich benötigte Menge an Reinigungsfluid eingesetzt wird, was auch die Betriebskosten senken kann. Ferner kann somit eine Überdosierung vermieden werden.

In einem weiteren Aspekt kann das Reinigungsfluid aus einer Flüssigkeit wie Wasser, Spiritus oder pflanzlichen Ölen bestehen oder eine Suspension, ein Tensid, ein Desinfektionsmittel, ein Enzym oder ein Biozid umfassen, um Verunreinigungen auf der Sensoranordnung gezielt zu entfernen.

In einem weiteren Aspekt kann die Umgebungstemperatur und/oder Umgebungsfeuchtigkeit erfasst werden und das Reinigungsfluid basierend auf der Umgebungstemperatur und/oder Umgebungsfeuchtigkeit temperiert werden.

Die Anpassung des Reinigungsfluids an die Umgebungsbedingungen, d.h. Umgebungstemperatur und/oder Umgebungsfeuchtigkeit, kann eine Optimierung der Reinigungsleistung ermöglichen. Ein temperiertes Reinigungsfluid kann besser in das Erntegut eindringen und Schmutz oder Rückstände vom Sensor effektiver lösen, was zu einer gründlicheren Reinigung führt. In kalten Umgebungen könnte beispielsweise ein Erwärmen des Reinigungsfluids helfen, die Viskosität zu reduzieren und den Fluss des Reinigungsfluids zu erleichtern, während in heißen Bedingungen durch gezielte Kühlung verhindert werden kann, dass das Reinigungsfluid seine Wirksamkeit verliert.

In einem weiteren Aspekt kann das Reinigungsfluid der Erntegutmenge zugegeben werden, indem das Reiningungsfluid in Richtung einer Förderrichtung des Gutstroms eingespritzt wird.

Die gerichtete Einspritzung kann eine bessere Integration des Reinigungsfluids in den Gutstrom ermöglichen. Durch die Anordnung in der Fließrichtung könnte das Fluid optimal verteilt werden und erreicht möglicherweise alle Bestandteile des Ernteguts, wodurch eine gleichmäßige Vermischung gewährleistet ist. Diese effektive Durchmischung könnte dazu führen, dass Schmutz und Rückstände effizienter gelöst und entfernt werden können.

In einem weiteren Aspekt kann das Reinigungsfluid der Erntegutmenge zugegeben werden, indem das Reinigungsfluid auf eine Konditioniervorrichtung gespritzt wird. Dabei kann die Konditioniervorrichtung im Gutstrom angeordnet sein.

Mit anderen Worten kann eine Konditioniervorrichtung zur Konditionierung der Erntegutmenge im Gutstrom positioniert werden, so dass die Konditioniervorrichtung vom Gutstrom umströmt wird. Die Anordnung der Konditioniervorrichtung im Gutstrom könnte bedeuten, dass das Reinigungsfluid direkt dort eingesetzt wird, wo es benötigt wird. Dabei kann das Reinigungsfluid beim Auftreffen auf die Konditionierungsvorrichtung zerstäuben. Durch die Umströmung der Konditioniervorrichtung durch das Erntegut wird sichergestellt, dass das Reinigungsfluid mit der Erntemenge mitgetragen und gleichmäßig verteilt wird.

In einem weiteren Aspekt kann das Reinigungsfluid impulsartig auf die Konditioniervorrichtung gespritzt werden.

Die impulsartige Einspritzung des Reinigungsfluids könnte bewirken, dass das Reinigungsfluid mit einer erhöhten Energiefreisetzung in den Gutstrom eingebracht wird, wodurch Turbulenzen im Fließverhalten des Gutstrom entstehen könnten. Diese turbulenten Strömungsverhältnisse könnten eine deutlich bessere Durchmischung des Reinigungsfluids mit dem Erntegut ermöglichen, da die wirbelnden Bewegungen die Moleküle des Reinigungsfluids gezielt im gesamten Gutstrom verteilen würden.

In einem weiteren Aspekt kann der definierte Wert manuell mittels einer Benutzerschnittstelle vorgegeben werden.

Die Vorgabe mittels einer Benutzerschnittstelle kann eine individuelle Anpassung an spezifische Anforderungen und Bedingungen bedeuten. Benutzer könnten je nach Art des Ernteguts, den aktuellen Wetterbedingungen oder dem Verschmutzungsgrad die optimalen Einstellungen vornehmen, was typischerweise eine maßgeschneiderte Lösung für jede Ernteoperation darstellt. Ein weiterer Vorteil der manuellen Vorgabe über eine Benutzerschnittstelle kann eine intuitive Handhabung sein. Die Bediener könnten auf einfache Weise Anpassungen vornehmen und nähere Informationen in Echtzeit einsehen, was dazu beitragen kann, Entscheidungen schneller und fundierter zu treffen. Dies kann zu einem besser informierten Betriebsablauf führen und die Sicherheit erhöhen, da Anpassungen bei Bedarf sofort umgesetzt werden können.

Ein weiterer Aspekt bezieht sich auf eine landwirtschaftliche Erntemaschine, insbesondere einen Feldhäcksler. Die landwirtschaftliche Erntemaschine kann zumindest ein Arbeitsaggregat zum Fördern eines Gutstroms, umfassend eine Erntegutmenge, umfassen. Die landwirtschaftliche Erntemaschine kann ferner eine Sensoranordnung zum Erfassen zumindest einer Eigenschaft des Gutstroms umfassen. Des Weiteren kann die landwirtschaftliche Erntemaschine eine Reinigungsvorrichtung zum Reinigen der Sensoranordnung umfassen. Dabei kann die Reinigungsvorrichtung eingerichtet und vorgesehen sein, der Erntegutmenge zum Reinigen der Sensoranordnung ein Reinigungsfluid zu zugegeben, sobald die Erntegutmenge im Gutstrom einen definierten Wert erreicht.

Weitere Vorteile und Merkmale ergeben sich aus den folgenden Ausführungsformen, die sich zum Teil auf die Figuren beziehen. Die Figuren zeigen die Ausführungsformen nicht immer maßstabsgetreu. Die Abmessungen der verschiedenen Merkmale können insbesondere zur Klarheit der Beschreibung entsprechend vergrößert oder verkleinert sein. Hierzu sind die Figuren zumindest teilweise schematisiert.

Es zeigen:
- Fig. 1: schematisch und exemplarisch eine landwirtschaftliche Erntemaschine;
- Fig. 2: schematisch und exemplarisch eine Darstellung einer Reinigungsvorrichtung und einer Steuerungsvorrichtung zur Ansteuerung einer Siliermittelanlage; und
- Fig. 3: exemplarisch eine verschmutzte Sichtscheibe und eine saubere Sichtscheibe der Sensoranordnung.

In der folgenden Beschreibung wird auf die beigefügten Figuren verwiesen, die Teil der Offenbarung sind und bestimmte Aspekte und Ausführungsformen veranschaulichen, unter denen die vorliegende Offenbarung verstanden werden kann. Gleiche Bezugszeichen beziehen sich auf gleiche oder zumindest funktionell oder strukturell ähnliche Merkmale.

Im Allgemeinen gilt eine Offenbarung eines beschriebenen Verfahrens auch für eine entsprechende Vorrichtung zur Durchführung des Verfahrens oder ein entsprechendes System, das ein oder mehrere Vorrichtungen umfasst, und umgekehrt. Wird beispielsweise ein bestimmter Verfahrensschritt beschrieben, so kann eine entsprechende Vorrichtung ein Merkmal zur Durchführung des beschriebenen Verfahrensschrittes enthalten, auch wenn dieses Merkmal in der Abbildung nicht ausdrücklich beschrieben oder dargestellt ist. Wird dagegen beispielsweise ein bestimmtes Gerät auf der Grundlage von Funktionseinheiten beschrieben, kann ein entsprechendes Verfahren einen oder mehrere Schritte zur Durchführung der beschriebenen Funktionalität enthalten, auch wenn diese Schritte in den Abbildungen nicht explizit beschrieben oder dargestellt sind. Ähnlicherweise kann ein System entsprechende Vorrichtungsmerkmal oder Merkmale zur Durchführung eines bestimmten Verfahrensschritts umfassen. Die Merkmale der verschiedenen oben oder unten beschriebenen beispielhaften Aspekte und Ausführungsformen können kombiniert werden, sofern nicht ausdrücklich etwas anderes angegeben ist.

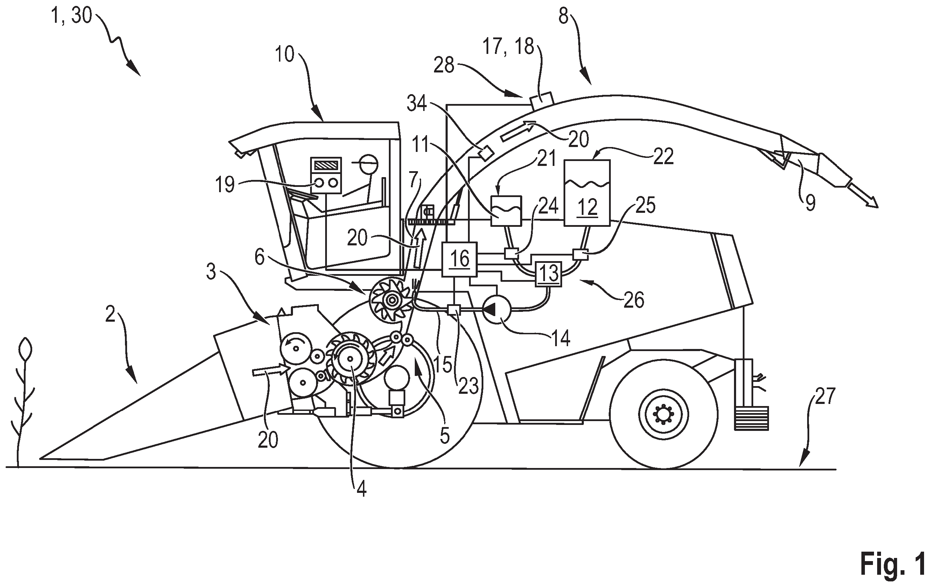

Fig. 1 zeigt beispielhaft eine erfindungsgemäße landwirtschaftliche Erntemaschine 1 in Form eines selbstfahrenden Feldhäckslers 30. Die landwirtschaftliche Erntemaschine 1 ist zur Durchführung des erfindungsgemäßen Verfahrens ausgeführt und eingerichtet. Es sei darauf hingewiesen, dass die Erfindung unter Erzielung vergleichbarer Effekte und Vorteile auch an anderen einen Erntegutstrom verarbeitenden Erntemaschinen umsetzbar ist.

Der Feldhäcksler 30 schneidet bei der Erntefahrt mittels eines frontseitig am Maschinenrahmen angeordneten Vorsatzgerätes 2 Pflanzenmaterial von einer zu bearbeitenden Fläche 27 ab und führt den so gewonnene Gutstrom 20, umfassen ein Erntegut bzw. eine Erntegutmenge, (Förderweg durch die Maschine angedeutet durch Pfeile) einem mit mehreren Vorpresswalzen ausgestatteten Einzugsaggregat 3 zu. Nach dortiger Vorpressung gelangt der Gutstrom 20 zur Häckseltrommel 4, die das Erntegut im Gutstrom 20 unter Zusammenwirkung mit einer feststehenden Gegenschneide (nicht bezeichnet) zerkleinert. Durch einen hinter der Häckseltrommel 4 aufsteigenden Förderschacht 7 tritt das gehäckselte Erntegut im Gutstrom 20 nach Bearbeitung durch eine Konditioniereinrichtung 5 (optional) und zusätzlicher Beschleunigung durch einen Nachbeschleuniger 6 in eine bogenförmig gekrümmte Überladeeinrichtung 8 ein, um durch deren maschinenabgewandte Auswurfklappe 9 zur Beladung eines Sammelbehälters aus dem Feldhäcksler 30 ausgeworfen zu werden.

Das ausgeworfene Erntegut des Gutstroms 20 wird in der Praxis oftmals einem Silierprozess unterzogen, um es für eine spätere Verfütterung an Nutztiere zu konservieren und/oder allgemein zu veredeln. Zum Auslösen bzw. zur effektiven Aufrechterhaltung des Silierprozesses und damit zum Erzielen eines guten Ergebnisses des Silierprozesses sind bestimmte Eigenschaften des Ernteguts erforderlich, welche gewünschte biologische bzw. chemische Vorgänge im Erntegut begünstigen. Da diese Eigenschaften nicht immer natürlich vorliegen, verfügt der Feldhäcksler 30 über eine Siliermittelanlage 26 zum Einbringen zumindest eines Hilfsmittels, welches den Silierprozess und damit die Qualität des Ernteguts bzw. der Erntegutmenge im Gutstrom 20 begünstigt.

Hierzu weist der Feldhäcksler 30 zwei Behälter 21, 22 auf, die mit unterschiedlichen Hilfsmitteln befüllt bzw. befüllbar sind. Der eine Behälter 21 ist mit einem flüssigen Siliermittel 11 gefüllt, das beispielsweise Milchsäurebakterien enthält. Der Behälter 21 ist vorteilhaft thermisch isoliert, um Temperaturerhöhungen des Siliermittels 11 und damit ein Absterben der Milchsäurebakterien zu verhindern. Der weitere Behälter 22 ist mit Wasser 12 gefüllt. Behälterunterseitig sind jeweils Ablauföffnungen vorgesehen, um die Behälter 21, 22 jeweils mittels einer Leitung mit einer gemeinsamen Mischeinheit 13 zu verbinden. An jeder der Leitungen zwischen den Behältern 21, 22 und der Mischeinheit 13 ist ein Durchflussmesser 24 bzw. 25 vorgesehen, der den jeweiligen Durchfluss durch die Leitung und damit den Abfluss aus den beiden Behältern 21, 22 erfasst. Die Durchflussmesser 24, 25 übermitteln entsprechende Durchflussmengensignale an eine zentrale Steuerungsvorrichtung 16.

Die Mischeinheit 13 ist ebenfalls mit der zentralen Steuerungsvorrichtung 16 signalverbunden, um von dieser angesteuert zu werden. Auf Basis empfangener Steuersignale ist die Mischeinheit 13 in der Lage, die Durchflussmengen der in den Behältern 21, 22 enthaltenen Hilfsmittel Siliermittel 11 und Wasser 12 durch die jeweiligen Leitungen zur Mischeinheit 13 in einem Bereich von 0% bis 100% im Sinne einer Mischbatterie beliebig zu drosseln. Auf diese Weise kann die Mischeinheit 13 die Hilfsmittel Siliermittel 11 und Wasser 12 in beliebig einstellbarem Verhältnis mischen. In einem Extremfall tritt reines Siliermittel 11, im anderen Extremfalls tritt reines Wasser 12 aus einem abgabeseitigen Auslass der Mischeinheit 13 aus. Dazwischen sind beliebige Mischverhältnisse einstellbar. Auch eine vollständige Sperrung der Mischeinheit 13 ist möglich, falls aufgrund der Erntebedingungen keines der beiden Hilfsmittel 11, 12 erforderlich ist. Im Regelfall wird eine durch die Mischeinheit 13 einstellbare Dosiermenge des Siliermittels 11 dem weiteren Hilfsmittel Wasser 12 zugeführt.

Eine Förderpumpe 14 mit veränderlicher Förderleistung ist über eine Leitung mit dem abgabeseitigen Auslass der Mischeinheit 13 verbunden, um das Gemisch der beiden Hilfsmittel 11, 12 gemäß an der Förderpumpe 14 angezeigter Pfeilrichtung zunächst durch einen weiteren Durchflussmesser 23 für die Gesamtdurchflussmenge der beiden Hilfsmittel 11, 12 und schließlich durch einen im Förderschacht 7 endenden, sich in Stromrichtung des Ernteguts 20 öffnenden Injektor 15 zu fördern, wodurch das Gemisch in fein verspritzter Form auf das vorbeiströmende Erntegut 20 appliziert wird.

Auch die Förderpumpe 14 ist mittels der Steuerungsvorrichtung 16 ansteuerbar, so dass sich die Gesamtdurchflussmenge des Flüssigkeitsgemischs, das durch den Injektor 15 dem Erntegut 20 zugeführt wird, durch Veränderung der Förderleistung steuern lässt. Der Durchflussmesser 23, dessen Durchflussmengensignal an die Steuerungsvorrichtung 16 übermittelt wird, dient als Rückkopplung für die Regelung der Gesamtmenge.

Zur selbsttätigen Einstellung einer effektiven Dosierung von zugegebenen Hilfsmitteln 11, 12 verfügt der Feldhäcksler 30 über zumindest eine Sensoranordnung 28 zur Erfassung von zumindest zwei Eigenschaften des Ernteguts 20. Diese umfasst einen NIR-Sensor 17 und eine Kamera 18, die an der Rückwand der Überladeeinrichtung 8 angeordnet sind. Die zumindest eine Sensoranordnung 28 ist mit der Steuerungsvorrichtung 16 signaltechnisch verbunden.

Mittels des NIR-Sensors 17 wird als eine der zumindest zwei Eigenschaften ein Trockenmassegehalt des Erntegutes 20 detektiert. Durch die Kamera 18 wird als zweite Eigenschaft ein Gehalt an erdigen Verunreinigungen im Erntegut 20 detektiert. Die jeweiligen Signale bzw. Daten des NIR-Sensors 17 sowie der Kamera 18 werden der Steuerungsvorrichtung 16 zur Auswertung zugeführt.

Der Feldhäcksler 30 verfügt weiterhin über eine Fahrerkabine 10, in der eine mit der Steuerungsvorrichtung 16 in Kommunikationsverbindung stehende Benutzerschnittstelle 19, wie ein Bedienterminal, für einen Bediener zugänglich angeordnet ist. Durch die Benutzerschnittstelle 19 lassen sich sämtliche Einstellungen für die Hilfsmittelzugabe vornehmen.

Zum Reinigen der Sensoranordnung 28 weist der Feldhäcksler eine Reinigungsvorrichtung 34 auf. Dabei ist die Reinigungsvorrichtung 34 eingerichtet und vorgesehen, der Erntegutmenge ein Reinigungsfluid zu zugegeben, sobald die Erntegutmenge im Gutstrom 20 einen definierten Wert erreicht. Wenn das Reinigungsfluid der Erntegutmenge hinzugefügt wird, vermischen sich beide Bestandteile, so dass der Gutstrom 20 eine Mischung aus Reinigungsfluid und Erntegutmenge umfasst. Wenn der Gutstrom 20 mit der Sensoranordnung 28 in Kontakt kommt, wird die Sensoranordnung 28 mittels des Reinigungsfluids gereinigt. Mit anderen Worten kann kurzfristig, für wenige Sekunden, die eine zuvor eingestellte Menge an Reinigungsfluid in die Erntegutmenge dosiert werden, sobald die Sensoranordnung 28 eine Beeinträchtigung der Sicht feststellt. Der Gutstrom 20, umfassend das angefeuchtete Erntegut, kann wie ein nasser Schwamm wirken, der die Sichtscheibe der Sensoranordnung 28 reinigt. Aufgrund der hohen Geschwindigkeit und des damit verbundenen hohen Anpressdrucks des Gutstroms 20 können hartnäckige Verschmutzungen effektiv abgerieben werden. Zusätzlich kann das zugegebene Reinigungsfluid unterstützen, den Zucker von der Sichtscheibe zu lösen.

Die Reinigungsvorrichtung 34 kann eine Injektionsvorrichtung aufweisen und das Reinigungsfluid kann mittels der Injektionsvorrichtung in die Erntegutmenge zugegeben werden. Dabei ist die Reinigungsvorrichtung 34 bzw. die Injektionsvorrichtung dem Nachbeschleuniger 6 in einer Förderrichtung des Gutstroms 20 nachgeordnet. Das Reinigungsfluid kann der Erntegutmenge, beispielsweise mittels der Injektionsvorrichtung, in zeitlichen Intervallen und impulsartig zugegeben werden, um eine gleichmäßige Verteilung zu gewährleisten und eine erhöhte Energiefreisetzung, beispielsweise mit der Folge von Turbulenzen, in den Gutstrom 20 einzubringen.

Der definierte Wert bezieht sich beispielsweise auf die Menge des Ernteguts, die im Gutstrom 20 vorhanden ist und die als Grundlage dienen kann, um zu entscheiden, ob und wann ein Reinigungsfluid zur Reinigung der Sensoranordnung 28 hinzugefügt werden soll. Der definierte Wert kann manuell mittels einer Benutzerschnittstelle 19 vorgegeben werden.

Es ist ferner möglich, dass die Erntegutmenge des Gutstroms 20 kontinuierlich bestimmt wird, indem eine Auslenkung eines Arbeitsaggregats 3, 4, 5, 6, beispielsweise der Vorpresswalzen bzw. Einzugsaggregats 3 des Feldhäckslers 30, ermittelt wird. Dabei kann das Erreichen des definierten Werts mittels der Auslenkung bestimmt werden. Alternativ kann die Erntegutmenge kontinuierlich mittels von der Sensoranordnung 28 erfassten Bilddaten bestimmt werden. Das Erreichen des definierten Werts kann mittels der Bilddaten bestimmt werden.

In einer alternativen Ausführungsform kann das Reinigungsfluid der Erntegutmenge mittels der Siliermittelanlage 26 zugegeben werden. Dafür kann beispielsweise der Behälter 22 derart ausgeführt sein, das Reinigungsfluid zu beinhalten. Das Reinigungsfluid kann mittels der Mischeinheit 13 dem Siliermittel 11 beigemischt werden. Das Gemisch von Siliermittel 11 und Reinigungsfluid kann mittels des Injektors 15 dem Gutstrom 20 zugegeben werden.

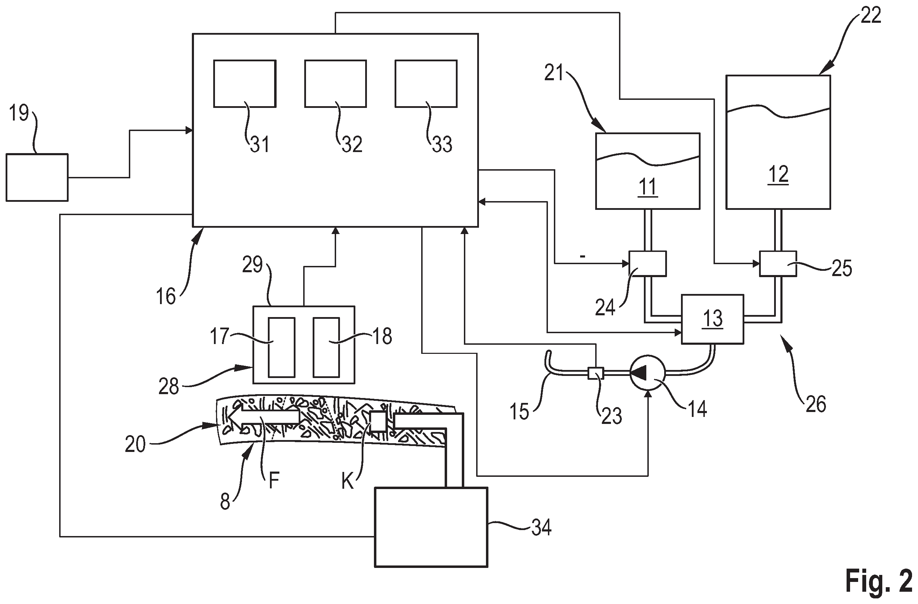

Fig. 2 zeigt schematisch und exemplarisch eine Darstellung einer Reinigungsvorrichtung 34 und einer Steuerungsvorrichtung 16 zur Ansteuerung einer Siliermittelanlage 26.

Der Gutstrom 20 wird durch die Überladeeinrichtung 8 in einer Förderrichtung F bewegt. Die Eigenschaft Trockenmassegehalt des Gutstroms 20 wird durch den NIR-Sensor 17 bestimmt und die Eigenschaft Gehalt an erdigen Verunreinigungen im Gutstrom 20 wird durch die Kamera 18 erfasst.

Der NIR-Sensor 17 und die Kamera 18 sind im dargestellten Ausführungsbeispiel in einem gemeinsamen Gehäuse 29 auf der Oberseite der Überladeeinrichtung 8 angeordnet. Die von dem NIR-Sensor 17 generierten Signale bzw. die von der Kamera 18 generierten Bilddaten können der Steuerungsvorrichtung 16 zur Auswertung zugeführt werden. Die Steuerungsvorrichtung 16 umfasst hierzu eine Recheneinheit 31, eine Speichereinheit 32 sowie eine Bildauswerteeinheit 33. Der NIR-Sensor 17 und die Kamera 18 können auch voneinander separiert in zwei Gehäusen angeordnet sein.

In der Speichereinheit 32 kann zumindest ein Bildauswertealgorithmus hinterlegt oder hinterlegbar sein, welcher durch die Bildauswerteeinheit 33 ausgeführt wird, um den Gehalt an erdigen Verunreinigungen im Erntegut 20 durch die Analyse der Bilddaten zu bestimmen. Zur Analyse der durch die Kamera 18 erzeugten Bilddaten des Erntegutes 20 durch den Maschinenlernalgorithmus kann beispielsweise zumindest ein trainierbares neuronales Netzwerk verwendet werden.

Die Reinigungsvorrichtung 34 dient zum Reinigen der Sensoranordnung 28. Dabei ist die Reinigungsvorrichtung 34 eingerichtet und vorgesehen, der Erntegutmenge zum Reinigen der Sensoranordnung 28 ein Reinigungsfluid zu zugegeben, sobald die Erntegutmenge im Gutstrom 20 einen definierten Wert erreicht.

Dabei wird die Erntegutmenge kontinuierlich ermittelt, indem die Auslenkung eines Arbeitsaggregats 3, 4, 5, 6 gemessen wird; das Erreichen des definierten Werts wird auf Basis dieser Auslenkung bestimmt. Alternativ kann die Erntegutmenge auch kontinuierlich durch die von der Sensoranordnung 28 erfassten Bilddaten bestimmt werden, wobei das Erreichen des definierten Werts ebenfalls mithilfe dieser Bilddaten erfolgt. Das Reinigungsfluid wird in diesem Verfahren gezielt in Richtung der Förderrichtung F des Gutstroms 20 eingespritzt, um eine effektive Verteilung und Durchmischung zu gewährleisten. Des Weiteren wird das Reinigungsfluid der Erntegutmenge zugegeben, indem das Reinigungsfluid auf eine Konditioniervorrichtung K gespritzt wird, wobei die Konditioniervorrichtung K im Gutstrom 20 angeordnet ist. Alternativ kann das Reinigungsfluid impulsartig auf die Konditioniervorrichtung K gespritzt werden.

Die Benutzerschnittstelle 19 kann weiterhin über eine Anzeige für sämtliche mit der Hilfsmittelzugabe in Verbindung stehenden Informationen verfügen. Im Rahmen des Auftragsmanagements der Erntemaschine 1 respektive des Feldhäckslers 30 können relevante Daten, insbesondere die Zugabemengen des Reinigungsfluids durch die Reinigungsvorrichtung 34 oder die Menge an Hilfsmitteln 11, 12, dokumentiert werden. Die Dokumentation kann dabei bevorzugt ortsbezogen erfolgen, wozu beispielsweise eine Ortung über ein geeignetes Ortungssystem des Feldhäckslers 30 genutzt werden kann. Umgekehrt könnten auch für die Hilfsmitteldosierung - neben den sensorisch erfassten Ernteguteigenschaften - Ortungsinformationen herangezogen werden, um ein georeferenziertes Zugeben der Hilfsmittel 11, 12 oder des Reinigungsfluids durchzuführen. Auf diese Weise könnten in der Praxis beispielsweise ganz gezielt nur auf Teilflächen der zu bearbeitenden Fläche 27 Hilfsmittel 11, 12 oder Reinigungsfluid in unterschiedlicher Dosierung zugegeben werden.

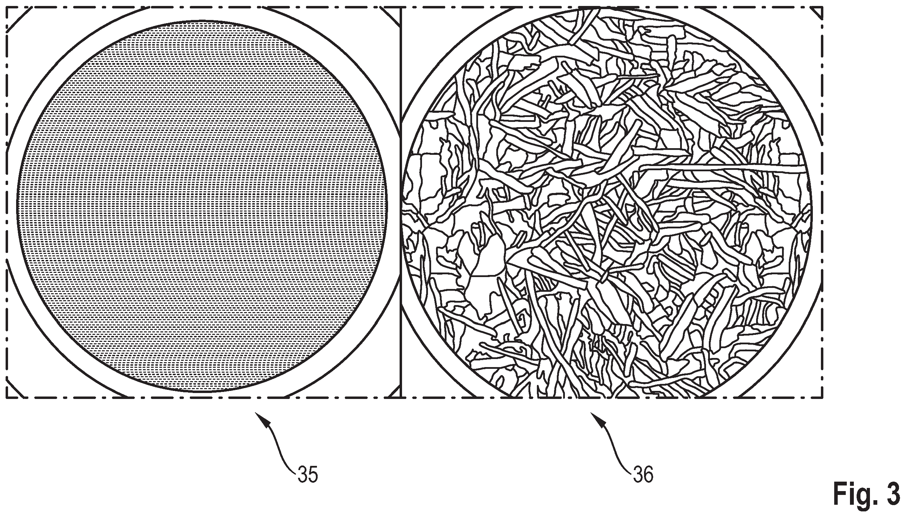

Fig. 3 zeigt exemplarisch eine verschmutzte Sichtscheibe 35 und eine saubere Sichtscheibe 36 der Sensoranordnung 28.

Die verschmutzte Sichtscheibe 35 und die saubere Sichtscheibe 36 sind hier Bestandteil einer Chop Quality Camera (CQC). Auf der verschmutzten Sichtscheibe 35 sind Zucker- und Schmutzablagerungen sichtbar, die die Präzision des Auswertealgorithmus der möglichen optischen Sensoren beeinträchtigen können. Beispielhaft erschwert dies insbesondere die Detektion erdiger Verunreinigungen im Erntegut, da nicht eindeutig festgestellt werden kann, ob die Verschmutzungen an der Scheibe oder im Erntegut selbst vorliegen.

Fig. 3 zeigt ferner ein Bild einer gereinigten sauberen Sichtscheibe 36. Diese wurde innerhalb weniger Sekunden (weniger als 10 Sekunden) durch den Gutstrom 20, umfassend die Erntegutmenge und das Reinigungsfluid, gesäubert. Das Verfahren zum Reinigen der Sensoranordnung 28 mittels des Reinigungsfluids kann die Notwendigkeit der manuellen Reinigung von Sichtscheiben in Feldhäckslern überflüssig machen. Das Problem der Verschmutzung der Sichtscheiben kann auch dann auftreten, wenn der Gutstrom 20 im Auswurfkrümmer bzw. in der Überladevorrichtung 8 des selbstfahrenden Häckslers 30 unterbrochen wird. In solchen Situationen, in denen der Gutstrom 20 fehlt und die Maschine 1 weiterläuft, trocknet der Schmutz auf der Scheibe aufgrund des Luftstroms in der Maschine 1 an. Um dem präventiv entgegenzuwirken, kann automatisch zusätzlich Wasser dosiert werden, wenn nur wenig Gutstrom 20 vorhanden ist. Dies soll sicherstellen, dass die Sichtscheibe möglichst wenig Verschmutzung aufweist, wenn beispielsweise gar kein Gutstrom 20 mehr in der Maschine 1 vorhanden ist und deshalb auch kein Schmutz durch den Luftstrom festtrocknen kann. Besonders am Vorgewende auf dem Feld oder während des Wechselns der Transportwagen kommt es häufig zu einem Abriss des Gutstroms 20, wodurch die Wahrscheinlichkeit von Verschmutzungen erhöht wird. Daher sollte in diesen Situationen möglicherweise automatisch und unabhängig zur Detektion durch den Sensor bzw. die Sensoranordnung 28, Wasser in den noch geringen Gutstrom 20 hinzugefügt werden. Diese Funktion ergänzt damit beispielsweise die bereits beschriebene Methode der automatischen Reinigung. Beide Funktionen lassen sich möglicherweise unabhängig voneinander aktivieren bzw. deaktivieren. Zudem kann bei beiden Funktionen jeweils individuell eine zudosierende Menge an Wasser durch den Fahrer eingestellt werden. Dadurch kann eine flexible Anpassung an unterschiedliche Erntebedingungen und Verschmutzungsgrade ermöglicht werden.

**Bezugszeichenliste**

| | | | |
|---|---|---|---|
| 1 | Erntemaschine | 34 | Reinigungsvorrichtung |
| 2 | Vorsatzgerät | 35 | verschmutzte Sichtscheibe |
| 3 | Einzugsaggregat | 36 | saubere Sichtscheibe |
| 4 | Häckseltrommel | F | Förderrichtung |
| 5 | Konditioniereinrichtung | K | Konditionierungsvorrichtung |
| 6 | Nachbeschleuniger | | |
| 7 | Förderschacht | | |
| 8 | Überladeeinrichtung | | |
| 9 | Auswurfklappe | | |
| 10 | Fahrerkabine | | |
| 11 | Hilfsmittel/Siliermittel | | |
| 12 | Hilfsmittel/Wasser | | |
| 13 | Mischeinheit | | |
| 14 | Förderpumpe | | |
| 15 | Injektor | | |
| 16 | Steuerungsvorrichtung | | |
| 17 | NIR-Sensor | | |
| 18 | Kamera | | |
| 19 | Benutzerschnittstelle | | |
| 20 | Gutstrom | | |
| 21 | Behälter | | |
| 22 | Behälter | | |
| 23 | Durchflussmesser | | |
| 24 | Durchflussmesser | | |
| 25 | Durchflussmesser | | |
| 26 | Siliermittelanlage | | |
| 27 | Fläche | | |
| 28 | Sensoranordnung | | |
| 29 | Gehäuse | | |
| 30 | Feldhäcksler | | |
| 31 | Recheneinheit | | |
| 32 | Speichereinheit | | |
| 33 | Bildauswerteeinheit | | |

## Patentansprüche

1. Verfahren zum Reinigen einer Sensoranordnung (28) einer landwirtschaftlichen Erntemaschine (1), insbesondere eines Feldhäckslers (30),
wobei ein Gutstrom (20), umfassend eine Erntegutmenge, durch zumindest ein Arbeitsaggregat (3, 4, 5, 6) der landwirtschaftlichen Erntemaschine (1) gefördert und zumindest eine Eigenschaft des Gutstroms (20) durch die Sensoranordnung (28) erfasst wird,
wobei der Erntegutmenge zum Reinigen der Sensoranordnung (28) ein Reinigungsfluid zugegeben wird, sobald die Erntegutmenge im Gutstrom (20) einen definierten Wert erreicht.

2. Verfahren nach Anspruch 1, wobei die Erntegutmenge kontinuierlich bestimmt wird, indem eine Auslenkung eines Arbeitsaggregats (3, 4, 5, 6) ermittelt wird, und wobei das Erreichen des definierten Werts mittels der Auslenkung bestimmt wird.

3. Verfahren nach Anspruch 1 oder 2, wobei die Erntegutmenge kontinuierlich mittels von der Sensoranordnung (28) erfassten Bilddaten bestimmt wird und wobei das Erreichen des definierten Werts mittels der Bilddaten bestimmt wird.

4. Verfahren nach einem der vorangehenden Ansprüche, wobei die landwirtschaftliche Erntemaschine (1) einen Nachbeschleuniger (6) als Arbeitsaggregat aufweist und das Reinigungsfluid mittels einer Injektionsvorrichtung in die Erntegutmenge zugegeben wird und die Injektionsvorrichtung dem Nachbeschleuniger (6) in einer Förderrichtung (F) des Gutstroms (20) nachgeordnet ist.

5. Verfahren nach einem der vorangehenden Ansprüche, wobei der Erntegutmenge zumindest ein dessen Qualität begünstigendes Siliermittel (11) und das Reinigungsfluid mittels einer Siliermittelanlage (26) zugegeben wird.

6. Verfahren nach einem der vorangehenden Ansprüche, wobei das Reinigungsfluid der Erntegutmenge in zeitlichen Intervallen zugegeben wird.

7. Verfahren nach einem der vorangehenden Ansprüche, wobei eine Menge des Reinigungsfluids vorbestimmt ist oder bestimmt wird, indem die Erntegutmenge im Gutstrom (20) ermittelt und zumindest eine Eigenschaft des Gutstroms (20) bestimmt wird, wobei die Menge von Reinigungsfluid in Abhängigkeit von der Erntegutmenge und der zumindest einen Eigenschaft des Gutstroms (20) bestimmt wird.

8. Verfahren nach einem der vorangehenden Ansprüche, wobei das Reinigungsfluid aus einer Flüssigkeit wie Wasser, Spiritus oder pflanzlichen Ölen besteht oder eine Suspension, ein Tensid, ein Desinfektionsmittel, ein Enzym oder ein Biozid umfasst, um Verunreinigungen auf der Sensoranordnung (28) gezielt zu entfernen.

9. Verfahren nach einem der vorangehenden Ansprüche, wobei die Umgebungstemperatur und/oder Umgebungsfeuchtigkeit erfasst wird und das Reinigungsfluid basierend auf der Umgebungstemperatur und/oder Umgebungsfeuchtigkeit temperiert wird.

10. Verfahren nach einem der vorangehenden Ansprüche, wobei das Reinigungsfluid der Erntegutmenge zugegeben wird, indem das Reiningungsfluid in Richtung einer Förderrichtung (F) des Gutstroms (20) eingespritzt wird.

11. Verfahren nach einem der vorangehenden Ansprüche, wobei das Reinigungsfluid der Erntegutmenge zugegeben wird, indem das Reinigungsfluid auf eine Konditioniervorrichtung (K) gespritzt wird, wobei die Konditioniervorrichtung (K) im Gutstrom (20) angeordnet ist.

12. Verfahren nach Anspruch 11, wobei das Reinigungsfluid impulsartig auf die Konditioniervorrichtung (K) gespritzt wird.

13. Verfahren nach einem der vorangehenden Ansprüche, wobei der definierte Wert manuell mittels einer Benutzerschnittstelle (19) vorgegeben wird.

14. Landwirtschaftlichen Erntemaschine (1), insbesondere ein Feldhäcksler, umfassend:
zumindest ein Arbeitsaggregat (3, 4, 5, 6) zum Fördern eines Gutstroms (20), umfassend eine Erntegutmenge,
eine Sensoranordnung (28) zum Erfassen zumindest einer Eigenschaft des Gutstroms (20), und
eine Reinigungsvorrichtung (34) zum Reinigen der Sensoranordnung (28), wobei die Reinigungsvorrichtung eingerichtet und vorgesehen ist, der Erntegutmenge zum Reinigen der Sensoranordnung (28) ein Reinigungsfluid zu zugegeben, sobald die Erntegutmenge im Gutstrom (20) einen definierten Wert erreicht.
